# EUROPEAN PATENT SPECIFICATION

(11) **EP 0 598 464 B1**
(45) Date of publication and mention of the grant of the patent: **11.09.1996**
(21) Application number: 93250296.6
(22) Date of filing: 29.10.1993
(51) Int. Cl.: C01B 25/36, B01J 27/16

(54) **Aluminum phosphate composition with high pore volume and large pore diameter, process for its production and use thereof**
Zusammensetzung auf der Basis von Aluminiumphosphat mit einem grossen Porenvolumen und einem grossen Porendurchmesser, Verfahren zu ihrer Herstellung und Anwendung davon
Composition à base de phosphate d'aluminium ayant un volume de pores élevé ainsi qu'un grand diamètre de pores, procédé pour sa production et son utilisation

(30) Priority: 04.11.1992 DE 4237145
(43) Date of publication of application: 25.05.1994
(73) Proprietor: GRACE GmbH, D-22841 Norderstedt (DE)
(72) Inventor: Rieser, Klaus, Dr., D-67550 Worms (DE); Weber, Christoph, Dr., D-69115 Heidelberg (DE); Welsh, William Alan, Highland, MD 20777 (US)
(74) Representative: UEXKÜLL & STOLBERG

(56) References cited:
- EP-A- 0 215 336
- EP-A- 0 515 880
- US-A- 3 342 750

## Description

### FIELD OF THE INVENTION

The invention relates to a homogeneous amorphous aluminium phosphate composition with a surface area of 100 to 300 m²/g and a pore volume in pores with a diameter of less than 1000 nm of at least 1.0 cm³/g, in which phosphorus and aluminium are present in a molar ratio in the range from 0.9:1 to 1:1, to a process for the production of this aluminium phosphate composition and to the use of this aluminium phosphate composition.

### BACKGROUND OF THE INVENTION

The prior art relating to aluminium phosphate and to its production is explained in detail in US-A-5 030 431. Disclosed in this patent specification is a novel production process with which homogeneous amorphous aluminium phosphate with high pore volume and relatively large pore diameters is successfully produced. The essential feature of the aluminium phosphate known from US-A-5 030 431 is the combination of high pore volume of at least 1.0 cm³/g and relatively low surface area of ca. 200 to 400 m²/g. This means that the average pore diameter is at least 12.5 and preferably at least 15.0 nm. The examples of this patent specification accordingly contain descriptions of aluminium phosphates with a pore diameter of up to 21.3 nm (Example 6).

The aluminium phosphate described in US-A-5 030 431 is suitable as a cracking catalyst, as a catalyst support, especially for ethylene polymerization catalysts, flatting agent, adsorption agent and thickening agent, and, because of its aforementioned properties, leads to clear improvements in the case of these applications.

It was now surprisingly discovered that the properties of the aluminium phosphate known from US-A-5 030 431 can be changed through additional process measures, so that the aluminium phosphate displays even further improved properties in relation to the aforementioned applications.

### SUMMARY OF THE INVENTION

The subject of the invention is accordingly a homogeneous amorphous aluminium phosphate composition of the type mentioned initially which is characterized in that it is present in the form of microspherical particles with a particle size of 10 to 250 µm and displays a bimodal pore-size distribution in the pore-diameter range of less than 1000 nm with maxima in the meso- (2 to 50 nm) and macropore (> 50 nm) diameter range.

The subject of the invention is also a process for the production of a homogeneous amorphous aluminium phosphate composition in the form of microspherical particles according to the invention.

Finally, the subject of the invention is the use of the inventive aluminium phosphate composition as a cracking catalyst, as a catalyst support, especially for polymerization catalysts, as a flatting agent, as an adsorption agent and as a thickening agent. The use as polymerization catalyst for the polymerization of ethylene is particularly preferred.

Preferred versions of the invention emerge from the following description and from the subsidiary claims.

### DETAILLED DESCRIPTION OF THE INVENTION

While the aluminium phosphate compositions known from the prior art such as US-A-5 030 431 display a monomodal pore-volume distribution with pore diameters in the mesopore range, i.e. in the pore-diameter range from 2 to 50 nm, the aluminium phosphate composition according to the invention has a bimodal pore-size distribution in the pore-diameter range of less than 1000 nm, i.e. the pore-size distribution displays maxima in the meso- and macropore diameter ranges (2 to 50 nm and > 50 nm). Such a bimodal pore-size distribution is desirable and leads, for example upon use of the aluminium phosphate as a support for ethylene polymerization catalysts, to a polymer with an increased melt index.

In the prior art relating to aluminium phosphate, the morphology of the aluminium phosphate particles has received no attention hitherto. It was found according to the invention that microspherical aluminium phosphate particles lead to polymerization catalysts which produce spherical polymer particles. Compared with polymers which have been produced with irregularly shaped catalyst particles, these polymer products have higher bulk densities. Polymers with higher bulk densities can be used without pelletization or extrusion for the further processing steps. The absence of the pelletizing or extrusion step means that polymers with a broader melt-index range can be produced.

The aluminium phosphate composition according to the invention has a combination of properties which makes it particularly suitable for the aforementioned uses. Thus, it is present in the form of microspherical particles with a particle size of 10 to 250 µm, preferably 30 to 70 µm and in particular ca. 50 µm. The pore volume is at least 1.0 cm³/g and preferably at least 1.3 cm³/g. The pore volume in pores with diameters of less than 60 nm is preferably at least 0.5 cm³/g. The pore volume in pores with diameters in the range from 60 to 1000 nm is preferably at least 0.2 ml/g. The surface area of the aluminium phosphate composition according to the invention lies in the range from 100 to 300 m²/g and preferably in the range from 100 to 200 m²/g. The maxima of the bimodal pore-size distribution preferably lie in the pore-diameter range from 10 to 20 nm and 100 to 200 nm.

Production of the aluminium phosphate composition according to the invention takes place in the manner known from US-A-5 030 431, but with additional process steps. For the sake of simplicity, reference is thus made to the disclosure in US-PS 5 030 431. However, it should be pointed out that the process described in US-A-5 030 431 can be modified in respect of the neutralization steps. Thus, in the first neutralization step, the base, in particular ammonium hydroxide, can also be added rapidly until hydrogel formation sets in. The addition of the base can also take place in the form of ammonia gas. Further, the second neutralization step can be carried out in such a way that the hydrogel is treated for ca. 10 to 30 hours at a temperature of ca. 60 to 90°C with a concentrated aqueous base solution. It is also possible to shorten the second neutralization stage, although the treatment period should be at least two hours and preferably at least four hours. Finally, the washing can take place following the second neutralization stage with water if the second neutralization stage has been carried out at an increased temperature of ca. 60 to 90°C and in particular ca. 85°C.

According to the modification which has been discussed of the neutralization stages of the process described in US-A-5 030 431, a preferred version of the production process comprises the following procedure. The hydrogel is produced by partly neutralizing the acid aqueous solution and leaving the partly neutralized composition to gel. A ca. 60 to 70% neutralization is preferred. The pH value of the partly neutralized composition is not critical, but should be kept low enough to avoid a precipitation. The quantity of base used in this stage is calculated with reference to the stoichiometry of the reaction. 100% neutralization means that all of the nitrate is converted to NH₄NO₃, which has a pH value of 3.5 to 4.5 in water. The pH value in the case of 100% neutralization is thus ca. 4.0.

Gaseous ammonia is suitable for the neutralization. The ammonia gas is added to the aqueous aluminium phosphate solution, accompanied by adequate thorough mixing, in order to achieve a uniform mixing of the reactants. The ammonia gas can bubble through the solution or be injected into the solution, at a rate at which the ammonia gas can be absorbed by the liquid, i.e. the ammonia gas does not simply bubble against the surface or expel the liquid. The rate of addition depends on the system in question and on the devices used. The determination of the suitable rate of feed is not a problem for the specialist and can easily be ascertained by means of a few tests. Thus, it was found for example that ca. 60 to 70 l of ammonia gas can be added to ca. 1 l of solution at a rate of ca. 5 to 6 l per minute, the bubbles disappearing in the liquid at this rate of feed.

With a ca. 2/3 neutralization, the mixture gels. The partly neutralized solution is then present in the form of a viscous mass and forms a clear homogeneous hydrogel which is solid enough for further processing in the succeeding process stages. A large amount of heat is released during the neutralization, as a result of which the temperature of the gel rises (e.g. to ca. 80°C in a non-insulated vessel). The gelled mass is a semi-solid material which breaks like glass upon application of small shearing forces, but flows like a plastic liquid when higher shearing forces are applied. The degree of plasticity is variable.

The resultant aluminium phosphate hydrogel is then subjected to a second neutralization treatment. The hydrogel, which can be reduced to lumps or pieces for easier handling, is treated with an aqueous basic solution. The basic solution must have a sufficient volume to cover the hydrogel and be strong enough to produce a final pH value of ca. 8.0 to 9.0. Ammonium hydroxide is preferred, although sodium hydroxide can also be used. If sodium hydroxide is used, ensure that residual sodium is washed out.

The hydrogel is preferably treated with a concentrated base such as ammonium hydroxide. This treatment leads to neutralization, the hydrogel remaining intact. It is preferred to use concentrated ammonium hydroxide (pH 10.0) at ca. 60.0 to 90.0°C and preferably ca. 80.0°C. In a preferred version, for example, the following materials and proportions by quantity can be used: for every part by weight of gel, one part by weight of deionized water is heated to ca. 80°C (to accelerate the process) and mixed with ca. 0.09 parts by weight of concentrated ammonium hydroxide solution (ca. 29 wt.-%). A solution with a smaller ammonia content can also be used, but it is preferred that a surplus of ammonia over and above the quantity needed for neutralization is present.

Typically, only a small thorough mixing is necessary in the case of this second neutralization stage, assuming that temperatures of ca. 60 to 90°C and preferably 80 to 85°C are achieved and the gel is exposed to the base in an appropriate manner. Thus, it is sufficient for example to pass through a gas or rotate the vessel. The hydrogel should be treated for at least ca. 2 hours and preferably at least ca. 4 hours.

As in the case of the wash described in US-A-5 030 431 with a hot dilute base solution, this treatment with a hot base also strengthens the hydrogel structure and maximizes the porosity of the aluminium phosphate composition upon removal of water. Accordingly, this modified mode of production also leads to a homogeneous hydrogel with good pore volume in the initial gel structure, the potential pore volume being maintained essentially through the treatment with a hot base.

Ammonium nitrate which has remained behind is removed by washing with water. Deionized water whose pH value is set at ca. 10 with ammonium hydroxide is used for preference. This pH value setting is not absolutely necessary, however. Washing can be either continuous or discontinuous. Mixing is preferably restricted to avoid the formation of fine-particled grindings. As already mentioned above, washing with water is also possible with the procedure according to US-A-5 030 431.

In the case of the described production method with modified neutralization, a calcination is recommended in order to free the solid aluminium phosphate composition of residual alcohol and ammonium nitrate. It is assumed that the removal of these residues maximizes the pore volume. Calcination is also possible, if at all desired, with the production method according to US-A-5 030 431. A calcination is recommended, for example, if the aluminium phosphate composition is to be used as a cracking catalyst. With the production method according to US-A-5 030 431, however, a calcination is often not necessary, because the residues are more thoroughly washed out with this procedure.

If a calcination is carried out, time and temperature are to be chosen in such a way that the nitrates which have remained behind are removed to an adequate extent. For example, the composition can be calcined for 1 hour at 538°C, although other times and temperatures can be used.

The exchanged, dried or calcined hydrogel which is thus obtained is ground according to the invention, mechanically (for example in a ball mill) or with a jet mill, to a particle size of less than 10 µ. This can take place in one or more grinding stages.

The particle size of the ground hydrogel is determined using the laser-diffraction method described by Heuer and Leschonsky, Part. Charact. 2, 7 (1985). An automatic Malvern instrument of the Mastersizer type was used for the measurements.

In the next process stage, the ground gel is suspended in water, accompanied by formation of a slurry with a solids content of 10 to 30 wt.-%. This process stage is combined with the grinding stage in practice, i.e. enough water is already added prior to grinding and the resultant slurry is then subjected to the milling process.

The pH value of the slurry which is to be spray-dried is to be 3 to 7. Accordingly, the pH value is set to this pH value, if necessary, through addition of an acid or base. The slurry is then spray-dried, the conditions being so chosen that the particle size of the resultant microspherical particles is 10 to 250 µm, preferably 30 to 70 µm and in particular ca. 50 µm. The conditions necessary for this are known to the specialist or can be ascertained through a few routine tests. This also includes the desired degree of drying which usually lies in the end-product in the case of a water content of less than 10 wt.-%.

The particle size of the end-product is determined according to the electric sensing zone method described by Alex et al., Chemie Ing. Techn. 46, 477 (1974). The measurements were performed with a Coulter Electronics automatic instrument of the Coulter Counter TA II type, using an aperture size of 560 µm.

If desired, the thus-obtained end-product can be subjected to a calcination in order to remove volatile constituents which are still present (cf. also US-A-5 030 431 in this connection).

The aluminium phosphate composition according to the invention has a broad bimodal pore-size distribution which covers the micro-, meso- and macropore ranges. As there is no procedure for determining the pore volume over the whole pore-size range, two procedures have been used. The pore volume in pores with diameters from 1.4 to 60 nm was ascertained using the procedure described by Lard and Brown, J. Catal., Volume 25, 451 (1972). The nitrogen adsorption isotherms were produced with the help of an automatic Micrometrics instrument of the ASAP 2400 type. The mercury pore volume in the pore range with diameters from 60 to 1000 nm was ascertained using the procedure described by Joyner et al., J. Am. Chem. Soc. 73, 3155 (1951) and Hustings and Scholten, Adsorpt. Sci. Technol. 4, 241 (1987). The measurements were carried out with an automatic Micrometrics instrument of the Autopore 9200 type. The bimodal pore-size distribution results qualitatively from the mercury penetration curves.

The surface area was determined in known manner according to Brunauer-Emmett-Teller (J. Am. Chem. Soc. 60, 309 (1938)). The nitrogen adsorption isotherms were measured with the help of an automatic Micrometrics instrument of the ASAP 2400 type.

The grinding according to the invention of the dried aluminium phosphate hydrogel leads to a further reduction in the surface area. This effect can be further increased by using aluminium hydroxychloride Al₂(OH)₅Cl (chlorohydrol) as aluminium source. The advantageous bimodal pore-volume or porediameter distribution of the aluminium phosphate composition according to the invention comes about because larger secondary particles with an additional pore structure are formed from the small primary particles during the spray-drying. Like the primary particles, the thus-formed secondary particles have also proved to be thermally stable (cf. again US-A-5 030 431), which is an essential precondition for the advantageous application of the aluminium phosphate composition according to the invention. Overall, the aluminium phosphate composition according to the invention has a surface area which is further reduced and even greater pore diameters compared with the prior art, the pore-diameter distribution being bimodal. Finally, the microspherical shape of the aluminium phosphate composition according to the invention has a favourable effect on the physical properties (for example, reduced wear during use as a catalyst). In the case of use as a support for polymerization processes in particular, the spherical shape of the aluminium phosphate composition according to the invention is of advantage, as the particle shape of the polymer product depends on the particle shape of the catalyst and, when spherical catalyst particles are used, spherical polymer particles are also obtained which result in a product of greater bulk density.

When the aluminium phosphate composition according to the invention is used as a support for polymerization catalysts, it is necessary to combine the aluminium phosphate composition with a catalytically active agent. This also takes place in the manner described in US-A-5 030 431. In addition to chromium, which can be added for example in the form of chromium (VI) oxide, chromium (IV) oxychloride, chromium (III) bromide, chromium (III) chloride, chromium (III) fluoride, chromium (III) iodide, chromium (III) acetate, chromium (III) phosphate, chromium (III) sulphate, chromium (III) nitrate and chromium (III) acetyl acetonate, other promoters such as boron, silicon or titanium can be introduced.

The invention is described in more detail below with reference to examples.

The products obtained underwent scanning electron microscope study with a Model 840 Jeol scanning electron microscope. The volatile components were determined through one hour's calcination of the samples at 950°C in a muffle furnace. Phosphorus and aluminium were determined, after decomposition of the samples in concentrated hydrochloric acid (32 wt.-%), by inductively coupled plasma atom emission spectroscopy, using a Model 3580 ARL instrument.

### Example 1

1604.4 g of Al(NO₃) x 9H₂O and 189.0 g of water were placed in a beaker and heated to ca. 80°C. After the aluminium nitrate had gone completely into solution, 483.0 g of NH₄H₂PO₄ were added, accompanied by stirring, and dissolved therein. The solution was left to cool to ambient temperature. The calculated molar P/Al ratio was 0.98.

538.6 g of the cooled solution were then placed in a Warren mixer. 124.0 ml of concentrated aqueous ammonia (30 wt.-%) were slowly added, accompanied by intensive thorough mixing (over a period of 39 minutes). The resultant viscous mass was transferred into a beaker and left to gel overnight. The calculated percentage neutralization (to NH₄NO₃) was 96.0% and the final solids content, calculated as AlPO₄, was 18.8 wt.-%.

The thus-obtained aluminium phosphate hydrogel was reduced to lumps measuring ca. 2.5 cm. 515 g of these lumps were transferred into another beaker, covered with an aqueous solution which contained 65 ml of concentrated aqueous ammonia (30 wt.-%), and left to stand overnight. The steeping solution (final pH value 8.5) was decanted and the hydrogel was transferred into another vessel for the subsequent wash treatment.

The hydrogel was washed for 19 hours in a continuous throughflow system with 85°C warm diluted aqueous ammonia solution (pH 10.0). The washed hydrogel was then subjected to 7 exchange treatments with acetone and dried overnight in a vacuum oven at 145°C. The dried product had a pore volume of 1.43 cm³/g and a surface area of 380.0 m²/g. The volatile constituents content was 12.3 wt.-%.

The above procedure was repeated 5 times in order to produce some 1.5 kg of aluminium phosphate gel in all.

1 kg of the aluminium phosphate gel was placed in a Rietz mill. 3 l of deionized water were added, so that a 25 wt.-% slurry was obtained which was milled through a 0.4 mm screen. The thus-obtained slurry was diluted with 880 ml of deionized water and 120 ml of dilute ammonia (12.5 wt.-%) in order to adjust the solids content of the slurry to 20 wt.-% and the pH value of the slurry to 4.2. This slurry was fed into a Premier ball mill which was 85% filled with 1.5 mm zirconium spheres. The rate of feed was 800 ml/min. The Premier ball mill was operated at 1500 rpm. The particle-size distribution (Malvern) of the thus-obtained slurry was: d₁₀ = 2.5 µm, d₅₀ = 4.8 µm, d₉₀ = 11.5 µm.

The thus-obtained slurry was spray-dried with the help of a Bowen BE1434 spray-drying device. The operating conditions were as follows: nozzle diameter 2 cm, atomization pressure 0.5 bar, inlet/outlet temperatures 370/160°C.

500 g of the spray-dried product were manually sieved through a 0.18 mm screen. Scanning electron microscope analysis showed that non-agglomerated aluminium phosphate microspheres were present. The end-product had the following properties:

| | |
|---|---|
| Molar ratio P/Al | = 0.96 |
| Surface area (m²/g) | = 108 |
| N₂ pore volume (cm³/g) | = 0.59 |
| Hg pore volume (cm³/g) | = 0.61 |
| d_{z} (µm) (ave. particle size) | = 39.6 |

### Example 2

Example 1 was repeated, with the following differences.

The starting solution was prepared using 1200.0 g of Al (NO₃)₃ x 9H₂O, 57.6 g of Cr (NO₃) x 9H₂O, 331.3 g of NH₄H₂PO₄ and 192.0 g of water. The calculated P/Al molar ratio was 0.90 and the calculated P/(Al+Cr) molar ratio was 0.86.

In the first neutralization stage, 556.5 g of solution were used and 133.5 ml of concentrated ammonia were added over a period of 44 minutes. The calculated neutralization percentage was 95.0% and the calculated final solids content was 17.5 wt.-%.

In the second neutralization stage, 566.5 g of hydrogel lumps were covered with an aqueous solution which contained 70 ml of concentrated ammonia. The final pH value of the steeping solution was 8.2.

The washing duration was 21 hours. The washed hydrogel was subjected to 8 exchange treatments with ethanol. The subsequent drying in a vacuum oven lasted for 19 hours at a temperature of 114°C.

Grinding took place as described in Example 1 and produced the following particle-size distribution: d₁₀ = 2.8 µm, d₅₀ = 5.5 µm, d₉₀ = 12.5 µm.

Spray-drying and manual sieving likewise took place as described in Example 1. Scanning electron microscope analysis again showed non-agglomerated microspherical particles. The end-product had the following properties:

| | |
|---|---|
| Molar ratio P/Al | = 0.90 |
| Cr (wt.-%) | = 2.2 |
| Surface area (m²/g) | = 172 |
| N₂ pore volume (cm³/g) | = 0.78 |
| Hg pore volume (cm³/g) | = 0.56 |
| d_{z} (µm) (ave. particle size) | = 54.7 |

### Example 3

Example 1 was repeated, with the following differences.

The starting solution was prepared using 1200.0 g of Al (NO₃)₃ x 9H₂O, 331.3 g of NH₄H₂PO₄ and 192.0 g of water. The calculated P/Al molar ratio was 0.90.

In the first neutralization stage, 556.5 g of solution were used and 133.5 ml of concentrated ammonia were added over a period of 44 minutes. The calculated neutralization percentage was 95.0% and the calculated final solids content was 17.5 wt.-%.

In the second neutralization stage, 566.5 g of hydrogel lumps were covered with an aqueous solution which contained 70 ml of concentrated ammonia. The final pH value of the steeping solution was 8.2.

The washing duration was 21 hours. The washed hydrogel was subjected to 8 exchange treatments with ethanol. The subsequent drying in a vacuum oven lasted for 19 hours at a temperature of 114°C.

Grinding took place as described in Example 1, with the difference that 160 g of chromium nitrate (Cr(NO₃) x 9H₂O) were also added to the slurry obtained after the milling in the Rietz mill. The following particle-size distribution resulted: d₁₀ = 2.2 µm, d₅₀ = 4.3 µm, d₉₀ = 10.7 µm.

Spray-drying and manual sieving likewise took place as described in Example 1. Here, too, scanning electron microscope analysis showed non-agglomerated microspherical particles. The end-product had the following properties:

| | |
|---|---|
| Molar ratio P/Al | = 0.90 |
| Cr (wt.-%) | = 1.0 |
| Surface area (m²/g) | = 172 |
| N₂ pore volume (cm³/g) | = 0.78 |
| Hg pore volume (cm³/g) | = 0.24 |
| d_{z} (µm) (ave. particle size) | = 51.2 |

## Claims

1. Homogeneous amorphous aluminium phosphate composition with a surface area of 100 to 300 m²/g and a pore volume in pores with diameters of less than 1000 nm of at least 1.0 cm³/g, in which phosphorus and aluminium are present in a molar ratio in the range from 0.9:1 to 1:1, **characterized in that** it is present in the form of microspherical particles with a particle size of 10 to 250 µm and displays a bimodal pore-size distribution in the pore-diameter range of less than 1000 nm with maxima in the meso-(2 to 50 nm) and macropore (> 50 nm) diameter range.

2. Composition according to claim 1, in which the maxima of the bimodal pore-size distribution lie in the pore-diameter range from 10 to 20 nm and 100 to 200 nm.

3. Composition according to claim 1 or 2 which displays a pore volume of at least 0.5 cm³/g in pores with diameters of less than 60 nm.

4. Composition according to one of claims 1 to 3 which displays a pore volume of at least 0.2 cm³/g in pores with diameters in the range from 60 nm to 1000 nm.

5. Composition according to one of claims 1 to 4 which is present in the form of microspherical particles with a particle size of 30 to 70 µm.

6. Composition according to one of claims 1 to 5 which contains one or more catalytically active agents.

7. Composition according to claim 6 in which the catalytically active agent is chromium.

8. Composition according to claim 7 which also includes boron, silicon or titanium.

9. Process for the production of a homogeneous amorphous aluminium phosphate composition in the form of microspherical particles according to any of claims 1 to 8 in which
a) an acid aqueous solution of one or more aluminium salts and one or more phosphate salts is produced, the solution displaying a molar P/Al ratio of 0.9:1 to 1:1,
b) this solution is partly neutralized, accompanied by intensive thorough mixing, by slow addition of a base, the pH value of the partly neutralized solution preferably being less than 5.0,
c) the partly neutralized solution is left to gel,
d) the thus-formed hydrogel is neutralized by treating it for 10 to 30 hours with an aqueous basic solution and then washing it with a hot, dilute base solution at a temperature of ca. 60 to 90°C,
e) the washed hydrogel is subjected to one or more exchange treatments with alcohol, acetone or ethyl acetate and
f) the exchanged hydrogel is dried to the desired volatile constituents content, **characterized in that**
g) the dried gel is ground, mechanically or with a jet mill, to a particle size of less than 10 µm,
h) the milled gel is suspended in water, accompanied by formation of a slurry with a solids content of 10 to 30 wt.-%,
i) the pH value of the slurry is set at 3 to 7 by addition of an acid or base and
j) the slurry is spray-dried.

10. Modified process according to claim 9 wherein in stage b), the solution is neutralized, accompanied by mixing, through rapid addition of ammonia gas or ammonium hydroxide until gelling takes place, the formed hydrogel is immediately neutralized by treating it for at least 2 hours and preferably at least 4 hours at ca. 60 to 90°C with a concentrated aqueous basic solution, the neutralized hydrogel is then washed with water and the process is then continued with the exchange treatment according to step e).

11. Modified process according to claim 9 wherein in stage d) the hydrogel is neutralized by treating it for at least 2 hours and preferably 4 hours at ca. 60 to 90°C and preferably ca. 85°C with a concentrated aqueous basic solution and the resultant neutralized hydrogel is washed with water.

12. Process according to one of claims 9 to 11 wherein stages g) and h) are combined by already mixing the dried gel, prior to grinding, with all or part of the necessary quantity of water.

13. Process according to one of claims 9 to 12 wherein the dried hydrogel from stage f) is calcined.

14. Process according to one of claims 9 to 13 wherein a catalytic agent is added in stage a) or after stage h).

15. Process according to claim 14 wherein one or more chromium salts are added as catalytic agent.

16. Use of the aluminium phosphate composition of one of claims 1 to 5 or produced according to one of claims 9 to 13, as a cracking catalyst, as a catalyst support, especially for polymerization catalysts, as a flatting agent, as an adsorption agent or as a thickening agent.

17. Use according to claim 16 wherein a composition according to one of claims 6 to 8 or produced according to claim 14 or 15 is used as a polymerization catalyst for the polymerization of ethylene.

## Patentansprüche

1. Homogene amorphe Aluminiumphosphatzusammensetzung mit einer Oberfläche von 100 bis 300 m²/g und einem Porenvolumen in Poren mit Durchmessern von weniger als 1000 nm von mindestens 1,0 cm³/g, in der Phosphor und Aluminium in einem molaren Verhältnis im Bereich von 0,9:1 bis 1:1 vorhanden sind, **dadurch gekennzeichnet**, daß sie in Form von mikrokugelförmigen Teilchen mit einer Teilchengröße von 10 bis 250 µm vorliegt und eine bimodale Porengrößeverteilung im Porendurchmesserbereich von weniger als 1000 nm mit Maxima im Meso-(2 bis 50 nm) und Makroporendurchmesserbereich (>50 nm) aufweist.

2. Zusammensetzung nach Anspruch 1, bei der die Maxima der bimodalen Porengrößeverteilung im Porendurchmesserbereich von 10 bis 20 nm und 100 bis 200 nm liegen.

3. Zusammensetzung nach Anspruch 1 oder 2, die ein Porenvolumen von mindestens 0,5 cm³/g in Poren mit Durchmessern von weniger als 60 nm aufweist.

4. Zusammensetzung nach einem der Ansprüche 1 bis 3, die ein Porenvolumen von mindestens 0,2 cm³/g in Poren mit Durchmessern im Bereich von 60 nm bis 1000 nm aufweist.

5. Zusammensetzung nach einem der Ansprüche 1 bis 4, die in Form von mikrokugelförmigen Teilchen mit einer Teilchengröße von 30 bis 70 µm vorliegt.

6. Zusammensetzung nach einem der Ansprüche 1 bis 5, die ein oder mehrere katalytisch wirksame Agentien enthält.

7. Zusammensetzung nach Anspruch 6, in der das katalytisch wirksame Agens Chrom ist.

8. Zusammensetzung nach Anspruch 7, die ferner Bor, Silicium oder Titan umfaßt.

9. Verfahren zur Herstellung einer homogenen amorphen Aluminiumphosphatzusammensetzung in Form von mikrokugelförmigen Teilchen gemäß einem der Ansprüche 1 bis 8, bei dem
a) eine saure, wäßrige Lösung von einem oder mehreren Aluminiumsalzen und einem oder mehreren Phosphatsalzen hergestellt wird, wobei die Lösung ein molares P/Al-Verhältnis von 0,9:1 bis 1:1 aufweist,
b) diese Lösung unter intensiver Durchmischung durch langsame Zugabe einer Base teilneutralisiert wird, wobei der pH-Wert der teilneutralisierten Lösung vorzugsweise weiniger als 5,0 beträgt,
c) die teilneutralisierte Lösung gelieren gelassen wird,
d) das so gebildete Hydrogel neutralisiert wird, indem es 10 bis 30 Stunden mit einer wäßrigen basischen Lösung behandelt wird und dann mit einer heißen, verdünnten Baselösung bei einer Temperatur von etwa 60 bis 90°C gewaschen wird,
e) das gewaschene Hydrogel einer oder mehreren Austauschbehandlungen mit Alkohol, Aceton oder Ethylacetat unterworfen wird und
f) das ausgetauschte Hydrogel auf den gewünschten Gehalt an flüchtigen Bestandteilen getrocknet wird, **dadurch gekennzeichnet,** daß man
g) das getrocknete Gel mechanisch oder mit einer Strahlmühle auf eine Teilchengröße von weniger als 10 µm mahlt,
h) das gemahlene Gel in Wasser unter Bildung einer Aufschlämmung mit einem Feststoffgehalt von 10 bis 30 Gew.-% suspendiert,
i) den pH-Wert der Aufschlämmung durch Zugabe einer Säure oder Base auf 3 bis 7 einstellt und
j) die Aufschlämmung sprühtrocknet.

10. Modifiziertes Verfahren nach Anspruch 9, bei dem man in Stufe b) die Lösung unter Mischen durch schnelle Zugabe von Ammoniakgas oder Ammoniumhydroxid neutralisiert, bis eine Gelbildung erfolgt, das gebildete Hydrogel unmittelbar neutralisiert, indem man es mindestens 2 Stunden und vorzugsweise mindestens 4 Stunden bei etwa 60 bis 90°C mit einer konzentrierten wäßrigen basischen Lösung behandelt, anschließend das neutralisierte Hydrogel mit Wasser wäscht und das Verfahren mit der Austauschbehandlung gemäß Stufe e) fortsetzt.

11. Modifiziertes Verfahren nach Anspruch 9, bei dem man in Stufe d) das Hydrogel neutralisiert, indem man es mindestens 2 Stunden und vorzugsweise 4 Stunden bei etwa 60 bis 90°C und vorzugsweise etwa 85°C mit einer konzentrierten wäßrigen basischen Lösung behandelt und das erhaltene neutralisierte Hydrogel mit Wasser wäscht.

12. Verfahren nach einem der Ansprüche 9 bis 11, bei dem man die Stufen g) und h) kombiniert, indem man das getrocknete Gel bereits vor der Vermahlung mit der gesamten oder einem Teil der erforderlichen Wassermenge versetzt.

13. Verfahren nach einem der Ansprüche 9 bis 12, bei dem man das getrocknete Hydrogel aus Stufe f) calciniert.

14. Verfahren nach einem der Ansprüche 9 bis 13, bei dem man in Stufe a) oder im Anschluß an Stufe h) ein katalytisches Agens zusetzt.

15. Verfahren nach Anspruch 14, bei dem man ein oder mehrere Chromsalze als katalytisches Agens zusetzt.

16. Verwendung der Aluminiumphosphatzusammensetzung gemäß einem der Ansprüche 1 bis 5 oder hergestellt nach einem der Ansprüche 9 bis 13 als Crackkatalysator, als Katalysatorträger, insbesondere für Polymerisationskatalysatoren, als Mattierungsmittel, als Adsorptionsmittel oder als Verdickungsmittel.

17. Verwendung nach Anspruch 16, bei der man eine Zusammensetzung gemäß einem der Ansprüche 6 bis 8 oder hergestellt nach Anspruch 14 oder 15 als Polymerisationskatalysator für die Polymerisation von Ethylen verwendet.

## Revendications

1. Composition de phosphate d'aluminium amorphe homogène avec une surface spécifique de 100 à 300 m²/g et un volume de pores dans les pores de diamètres inférieurs à 1000 nm d'au moins 1,0 cm³/g, dans laquelle le phosphore et l'aluminium sont présents en un rapport molaire dans l'intervalle de 0,9:1 à 1:1, caractérisée en ce qu'elle est présente sous la forme de particules microsphériques avec une taille de particules de 10 à 250 µm et présente une distribution de tailles de pores bimodale dans l'intervalle des diamètres de pores inférieurs à 1000 nm avec des maxima dans l'intervalle des méso- (2 à 50 nm) et des macropores (> 50 nm).

2. Composition selon la revendication 1, dans laquelle les maxima de la distribution de tailles de pores bimodale résident dans l'intervalle des diamètres de pores de 10 à 20 nm et de 100 à 200 nm.

3. Composition selon la revendication 1 ou 2, qui présente un volume de pores d'au moins 0,5 cm³/g dans les pores avec des diamètres inférieurs à 60 nm.

4. Composition selon l'une des revendications 1 à 3, qui présente un volume de pores d'au moins 0,2 cm³/g dans les pores de diamètres dans l'intervalle de 60 nm à 1000 nm.

5. Composition selon l'une des revendications 1 à 4, qui est présente sous la forme de particules microsphériques avec une taille de particules de 30 à 70 µm.

6. Composition selon l'une des revendications 1 à 5, qui contient un ou plus agents actifs catalytiquement.

7. Composition selon la revendication 6, dans laquelle l'agent actif catalytiquement est le chrome.

8. Composition selon la revendication 7, qui inclut également du bore, du silicium ou du titane.

9. Procédé pour la production d'une composition de phosphate d'aluminium amorphe homogène sous la forme de particules microsphériques selon l'une quelconque des revendications 1 à 8, dans lequel
a) une solution aqueuse acide d'un ou plus sels d'aluminium et d'un ou plus sels de phosphate est produite, la solution présentant un rapport molaire P/Al de 0,9:1 à 1:1,
b) cette solution est partiellement neutralisée, accompagnée d'un mélange intime intensif, par l'addition lente d'une base, la valeur du pH de la solution partiellement neutralisée étant préférablement inférieue à 5,0,
c) la solution partiellement neutralisée est laissée à gélifier,
d) l'hydrogel ainsi formé est neutralisé en le traitant pendant 10 à 30 heures avec une solution basique aqueuse et ensuite lavage avec une solution de base diluée, chaude, à une température d'environ 60 à 90°C,
e) l'hydrogel lavé est soumis à un ou plus traitements d'échange avec de l'alcool, de l'acétone ou de l'acétate d'éthyle ,et
f) l'hydrogel échangé est séché à la teneur en constituants volatils désirée, caractérisé en ce que
g) le gel séché est broyé, mécaniquement ou avec un broyeur à jet, à une taille de particules inférieure à 10 µm,
h) le gel broyé est mis en suspension dans de l'eau, accompagné par la formation d'une boue avec une teneur en solides de 10 à 30% en poids,
i) la valeur du pH de la boue est établie à 3 à 7 par addition d'un acide ou d'une base et
j) la boue est séchée par vaporisation.

10. Procédé modifié selon la revendication 9, dans lequel dans l'étape b), la solution est neutralisée, accompagné par un mélange, par addition rapide de gaz ammoniac ou d'hydroxyde d'ammonium jusqu'à ce qu'une gélification se produise, l'hydrogel formé est immédiatement neutralisé en le traitant pendant au moins 2 heures et, de préférence au moins 4 heures à environ 60 à 90°C avec une solution basique aqueuse concentrée, l'hydrogel neutralisé est ensuite lavé avec de l'eau et le procédé est ensuite continué avec le traitement d'échange selon l'étape e).

11. Procédé modifié selon la revendication 9, dans lequel à l'étape d) l'hydrogel est neutralisé en le traitant pendant au moins 2 heures et, de préférence, 4 heures à environ 60 à 90°C et, de préférence, environ 85°C avec une solution basique aqueuse concentrée et l'hydrogel neutralisé résultant est lavé avec de l'eau.

12. Procédé selon l'une des revendications 9 à 11, dans lequel les étapes g) et h) sont combinées par déjà mélange du gel séché, avant le broyage, avec toute ou partie de la quantité nécessaire d'eau.

13. Procédé selon l'une des revendications 9 à 12, dans lequel l'hydrogel séché provenant de l'étape f) est calciné.

14. Procédé selon l'une des revendications 9 à 13, dans lequel un agent catalytique est ajouté à l'étape a) ou à l'étape h).

15. Procédé selon la revendication 14, dans lequel un ou plus sels de chrome sont ajoutés en tant qu'agent catalytique.

16. Utilisation de la composition de phosphate d'aluminium selon l'une des revendications 1 à 5 ou produite selon l'une des revendications 9 à 13, comme catalyseur de craquage, comme support de catalyseur, spécialement pour des catalyseurs de polymérisation, en tant qu'agent de ponçage, en tant qu'agent d'adsorption ou en tant qu'agent épaississant.

17. Utilisation selon la revendication 16, dans laquelle une composition selon l'une des revendications 6 à 8 ou produite selon la revendication 14 ou 15 est utilisée en tant que catalyseur de polymérisation pour la polymérisation de l'éthylène.
